# DEMANDE DE BREVET EUROPEEN

(11) **EP 3 228 845 A1**
(43) Date de publication de la demande: **11.10.2017**
(21) Numéro de dépôt: 17164047.7
(22) Date de dépôt: 31.03.2017
(51) Int. Cl.: F02C 7/045

(54) **PANNEAU ACOUSTIQUE POUR NACELLE D'AÉRONEF ET PROCÉDÉ DE FABRICATION DU PANNEAU ACOUSTIQUE**

(30) Priorité: 04.04.2016 FR 1652941
(71) Demandeur: Airbus Operations S.A.S., 31060 Toulouse (FR)
(72) Inventeur: MENAY, Hassan, 44300 NANTES (FR); RAVISE, Florian, 44000 NANTES (FR)
(74) Mandataire: Gicquel, Olivier Yves Gérard

(57) **Abrégé**

- Panneau acoustique pour nacelle d'aéronef et procédé de fabrication du panneau acoustique.
- Le panneau acoustique est rapide, facile et peu onéreux à fabriquer tout en gardant une résistance importante aux contraintes mécaniques, ledit panneau acoustique pour nacelle d'aéronef comprenant une couche alvéolaire configurée pour piéger du bruit, une peau pleine fixées sur une surface (5.2) de la couche alvéolaire et une peau acoustique fixée sur une autre surface opposée de la couche alvéolaire, la peau acoustique comprenant une couche d'un matériau tissé pré-imprégné contenant des fils de trame (7) espacés les uns des autres et des fils de chaîne (8) espacés les uns des autres, de façon que la peau acoustique présente des ouvertures (9) entre les fils (7, 8).

## Description

La présente invention concerne un panneau acoustique pour une nacelle d'aéronef.

L'invention concerne également un procédé de fabrication d'un tel panneau acoustique pour une nacelle d'aéronef.

Les aéronefs, notamment les aéronefs à réaction, possèdent des turboréacteurs sources d'émissions sonores importantes.

Afin d'atténuer les émissions sonores provenant des turboréacteurs, les nacelles de ces turboréacteurs sont équipées de panneaux acoustiques recouvrant la paroi interne des nacelles au niveau des entrées d'air.

Généralement, ces panneaux acoustiques ont une structure de type sandwich. Ils sont habituellement façonnés dans un moule pour leur donner une forme appropriée à la nacelle qu'ils doivent équiper. Ces panneaux comportent une ou plusieurs couches de structure alvéolaire de type nid d'abeille apte à piéger le bruit. Cette couche de structure alvéolaire présente une face externe recouverte d'une couche poreuse, dite peau acoustique, et d'une face interne recouverte d'une couche imperméable, dite peau pleine.

Actuellement, la peau acoustique utilisée pour les panneaux acoustiques est fabriquée par des procédés longs et complexes. Par exemple, la peau acoustique peut être fabriquée à partir de bandes acoustiques soudées entre elles. Après assemblage, ces bandes acoustiques nécessitent une inspection manuelle complète pour évaluer leur qualité. Ensuite, les bandes acoustiques sont soudées entre elles afin de recouvrir le moule qui façonne le panneau acoustique. À titre d'exemple, la peau acoustique doit recouvrir une surface d'environ 12 m² d'un moule prévu pour une nacelle d'un aéronef de type A380. Le procédé de fabrication de la peau acoustique est donc long, complexe et couteux à mettre en oeuvre.

Il existe des alternatives de fabrication de peaux acoustiques à partir de couches perforées. La perforation peut être réalisée avant ou après l'assemblage des couches du panneau acoustique. Cependant, l'étape de perforation de ces couches génère une perte importe de matière constituant ces couches. L'étape de perforation peut aussi fragiliser la structure du matériau constituant ces couches.

La présente invention a pour objet de pallier ces inconvénients en proposant un panneau acoustique rapide, peu onéreux à fabriquer et procurant une meilleure résistance mécanique.

À cet effet, l'invention concerne un panneau acoustique pour nacelle d'aéronef, comprenant :
- une couche alvéolaire, la couche alvéolaire étant délimitée par une première surface et une deuxième surface opposée,
- une peau acoustique fixée sur la première surface de la couche alvéolaire,
- une peau pleine fixée sur la deuxième surface de la couche alvéolaire,
   la peau acoustique comprenant une couche d'un matériau tissé pré-imprégné contenant des fils de trame espacés les uns des autres et des fils de chaîne espacés les uns des autres, de façon que la peau acoustique présente des ouvertures entre les fils.

Selon une autre particularité, les fils de trame présentent un espacement entre eux compris entre 0,3 mm et 1,5 mm.

En outre, les fils de chaîne présentent un espacement entre eux compris entre 0,3 mm et 1,5 mm.

L'invention concerne également un procédé de fabrication d'un panneau acoustique pour nacelle d'aéronef comprenant :
- une étape de dépôt, sur la surface d'un moule, d'une peau acoustique,
- une étape de fixation, sur la peau acoustique, d'une première surface d'une couche alvéolaire configurée pour piéger du bruit,
- une étape de fixation, sur une deuxième surface de la couche alvéolaire opposée à la première surface, d'une peau pleine,

l'étape de dépôt, sur la surface d'un moule, d'une peau acoustique consistant à déposer une couche de matériau tissé pré-imprégné contenant des fils de trame espacés les uns des autres et des fils de chaîne espacés les uns des autres, de façon à former des ouvertures entre les fils.

De plus, le procédé comprend une étape de confection de la peau acoustique incluant :
- une étape de tissage d'une couche, de façon que les fils de trame du tissage soient espacés les uns des autres et que les fils de chaîne du tissage soit espacés les uns des autres, de manière à former une couche de matériau tissé,
- une étape de pré-imprégnation du matériau tissé de façon à former une couche de matériau tissé pré-imprégné.

Selon une variante, l'étape de pré-imprégnation comprend :
- une étape de trempage du matériau tissé dans un bain comprenant une résine dissolue dans un solvant, et
- une étape de séchage de façon que le solvant s'évapore du matériau tissé pré-imprégné.

Selon une autre variante, l'étape de pré-imprégnation comprend :
- une étape d'application d'une résine sur un substrat par thermo-enduction, et
- une étape de pressage et de chauffage du substrat avec le matériau tissé de façon que la résine imprègne le matériau tissé.

De façon facultative, l'étape de dépôt de la peau acoustique sur la surface d'un moule est suivie d'une étape de polymérisation de la peau acoustique.

Par ailleurs, chaque étape de fixation comprend une étape de dépôt d'un adhésif polymérisable.

De plus, l'étape de fixation d'une peau pleine sur la couche alvéolaire est suivie d'une étape de polymérisation de la peau acoustique et de l'adhésif polymérisable.

L'invention concerne aussi une nacelle d'un aéronef comprenant un panneau acoustique tel que décrit ci-dessus.

L'invention concerne également un aéronef comportant une telle nacelle.

L'invention, avec ses caractéristiques et avantages, ressortira plus clairement à la lecture de la description faite en référence aux dessins annexés dans lesquels :
- la figure 1 représente une vue de dessus d'un aéronef dont les nacelles comprennent un panneau acoustique ;
- la figure 2 représente une vue en perspective d'une nacelle d'aéronef comprenant un panneau acoustique ;
- la figure 3 représente une vue en perspective d'un panneau acoustique selon un mode de réalisation ;
- la figure 4 représente une vue en perspective d'un panneau acoustique retirée du moule permettant de former le panneau acoustique ;
- la figure 5 représente une coupe transversale d'un panneau acoustique ;

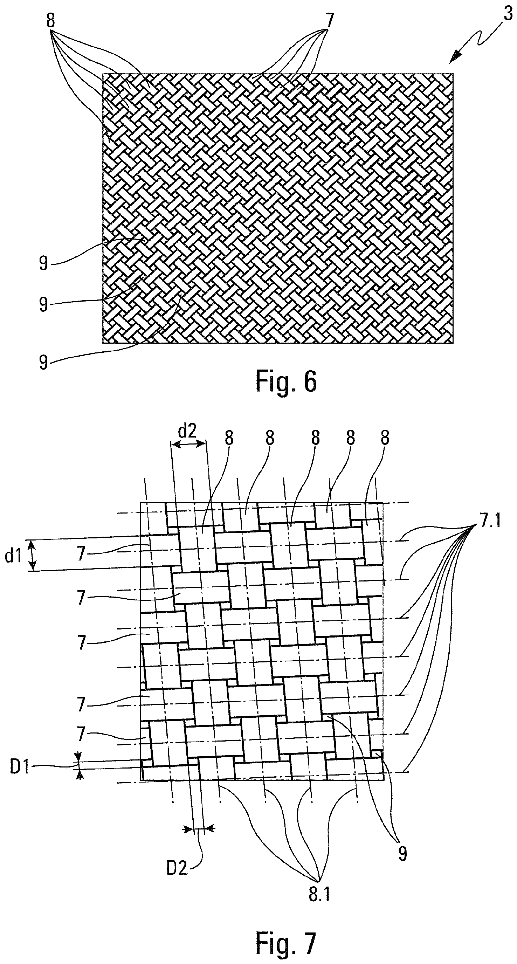

- la figure 6 représente une vue de dessus d'une peau acoustique d'un panneau acoustique selon un mode de réalisation ;
- la figure 7 représente une vue approchée de la peau acoustique selon un mode de réalisation ;

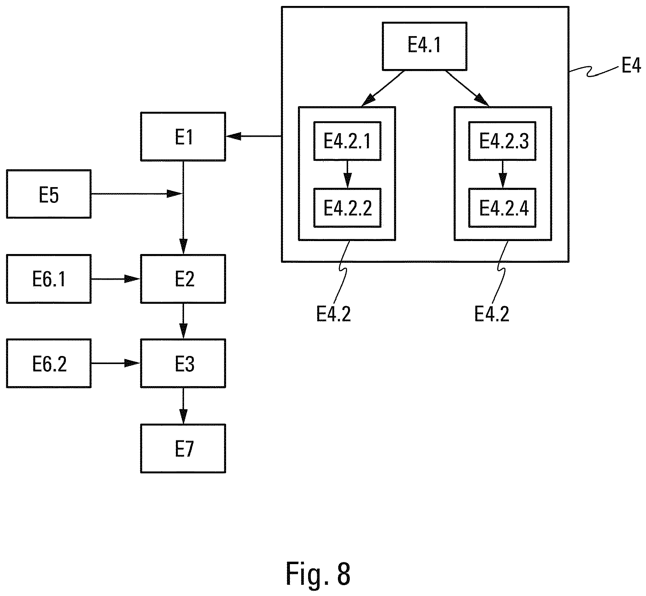

- la figure 8 représente un schéma fonctionnel d'un procédé de fabrication d'un panneau acoustique pour nacelle d'aéronef.

La suite de la description fera référence aux figures citées ci-dessus.

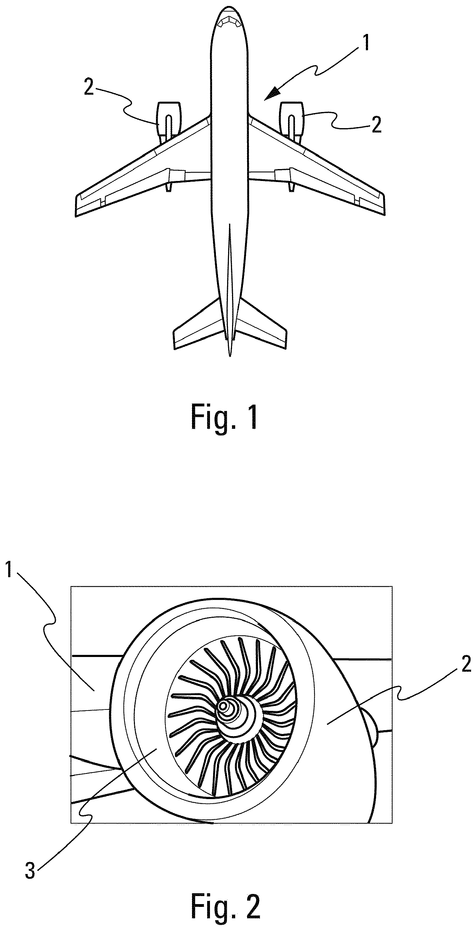

L'invention concerne un panneau acoustique 3 pour nacelle 2 d'aéronef 1, notamment la nacelle d'un avion de transport (figure 1).

Ce panneau acoustique 3 peut être disposé sur la paroi interne d'une nacelle 2 d'aéronef 1 (figure 2).

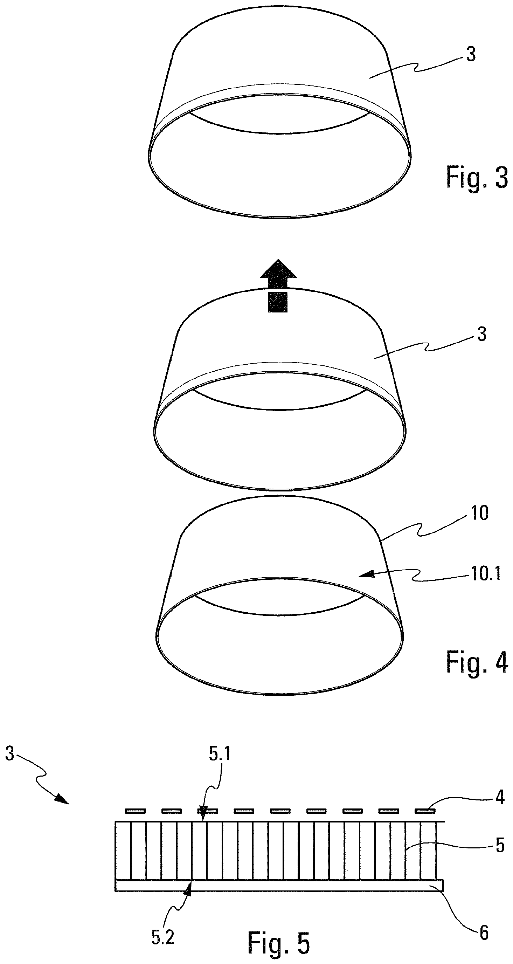

Comme représenté sur la figure 3, ledit panneau 3 comprend une couche alvéolaire 5 configurée pour piéger du bruit.

La structure de la couche alvéolaire 5 comprend une ou plusieurs sous-couches de structure alvéolaire.

À titre d'exemple, la structure de la couche alvéolaire 5 est de type nid d'abeille.

La couche alvéolaire 5 est délimitée par une première surface 5.1 et une deuxième surface opposée 5.2.

Ledit panneau 3 comprend en outre une peau acoustique 4 fixée sur la première surface 5.1 de la couche alvéolaire 5 et une peau pleine 6 fixée sur la deuxième surface 5.2 de la couche alvéolaire 5.

La peau pleine 6 est une couche imperméable à l'air. Par exemple, la peau pleine 6 est une couche en carbone.

La peau acoustique 4 comprend une couche d'un matériau tissé pré-imprégné contenant des fils de trame 7 espacés les uns des autres et des fils de chaîne 8 espacés les uns des autres. La peau acoustique 4 présente des ouvertures 9 délimitées par les espacements deux à deux entre les fils de trame 7 et entre les fils de chaîne 8.

De préférence, les fils 7 et 8 sont régulièrement espacés entre eux.

De préférence, l'espacement D1 entre les fils de trame 7 est le même que l'espacement D2 entre les fils de chaîne 8.

De façon non limitative, l'espacement D1 entre les fils de trame 7 est compris entre 0,3 mm et 1,5 mm.

Également de façon non limitative, l'espacement D2 entre les fils de chaîne 8 est compris entre 0,3 mm et 1,5 mm.

Les axes longitudinaux 7.1 des fils de trame 7 sont sensiblement parallèles entre eux.

De même, les axes longitudinaux 8.1 des fils de chaîne 8 sont sensiblement parallèles entre eux.

Selon une variante, les axes longitudinaux 7.1 des fils de trame 7 sont perpendiculaires aux axes longitudinaux 8.1 des fils de chaîne 8.

Selon une autre variante, les axes longitudinaux 7.1 des fils de trame 7 forment un angle strictement supérieur à 0° et inférieur à 90° avec les axes longitudinaux 8.1 des fils de chaîne 8.

Préférentiellement, la peau acoustique 4 est réalisé par tissage afin de maitriser l'espacement D1 et D2 des fils de trame 7 et des fils de chaîne 8 entre eux. Ainsi, la peau acoustique présente une résistance mécanique, en conditions d'utilisation, supérieure à la peau acoustique de l'art antérieur. En particulier, les performances mécaniques radiales sont améliorées.

Le fait que le matériau soit pré-imprégné permet également de maintenir l'espacement entre les fils 7 et 8, notamment pendant la fabrication du panneau 3.

Selon une variante de réalisation, les fibres de peau acoustique 4 sont obtenues par tissage 3D.

La signification de terme « fil » peut être étendue à tout corps allongé qui peut être tissé. Le terme « fil » peut, notamment, signifier fil ou bande.

De préférence, les fils 7 et 8 sont fabriqués à partir de fibres en forme de filaments. Ainsi, les fils 7 et 8 peuvent être définis en nombre de filaments par fil (« *tow count* » en anglais). Ce nombre et les dimensions des filaments permettent de connaître les distances d1 et d2 entre les espacements D1 et D2.

À titre d'exemple, les fibres à partir desquelles les fils 7 et 8 sont fabriqués sont des fibres de carbone.

Le panneau 3 possède ainsi des propriétés remarquables, telles qu'un allègement du poids par rapport aux panneaux acoustiques connus et un profil aérodynamique amélioré.

L'invention concerne également un procédé de fabrication d'un panneau acoustique 3 pour nacelle 2 d'aéronef 1.

Le procédé comprend une étape E1 de dépôt de la peau acoustique 4 sur une surface 10.1 d'un moule 10. La forme de la surface 10.1 du moule 10 est adaptée à la forme de la nacelle 2 destinée à être équipée par le panneau acoustique 3.

Cette étape E1 de dépôt d'une peau acoustique 4 consiste à déposer une couche de matériau tissé pré-imprégné, tel que celui précédemment décrit. Le dépôt de la peau acoustique 4 peut comprendre le dépôt de matériau tissé pré-imprégné sous forme de parcelles (ou pièces) de matériau tissé pré-imprégné ou de bandes de matériau tissé pré-imprégné. Par exemple, ces bandes sont des bandes enroulées qui sont déroulées lors du dépôt de la peau acoustique 4. Des zones discrètes de recouvrement en des parcelles ou des bandes peuvent exister pour assurer l'intégrité de la structure.

Le procédé comprend en outre une étape E2 de fixation de la première surface 5.1 de la couche alvéolaire 5 sur la peau acoustique 4.

Le procédé comprend aussi une étape E3 de fixation de la peau pleine 6 sur la deuxième surface 5.2 de la couche alvéolaire 5. Cette deuxième surface 5.2 est opposée à la première surface 5.1 de la couche alvéolaire 5.

Le procédé comprend, par ailleurs, une étape préliminaire E4 de confection de la peau acoustique 4. Cette étape E4 consiste à confectionner la couche de matériau tissé pré-imprégné contenant des fils de trame 7 espacés les uns des autres et des fils de chaîne 8 espacés les uns des autres, de façon à former des ouvertures 9 entre les fils 7 et 8.

Dans un mode de réalisation, l'étape E4 de confection de la peau acoustique 4 comprend une étape E4.1 de tissage d'une couche, de façon que les fils de trame 7 du tissage soient espacés les uns des autres et que les fils de chaîne 8 du tissage soit espacés les uns des autres, de manière à former une couche de matériau tissé.

Par ailleurs, l'étape E4 de confection comprend une étape E4.2 de pré-imprégnation du matériau tissé de façon à former une couche de matériau tissé pré-imprégné.

L'étape E4.2 de pré-imprégnation peut être réalisée selon différentes méthodes.

Selon un mode de réalisation, l'étape E4.2 de pré-imprégnation peut mettre en oeuvre une méthode d'imprégnation par solvant (« *solvent dip process* » ou « *solvent impregnation process* » en anglais).

Selon cette méthode, l'étape E4.2 de pré-imprégnation comprend :
- une étape E4.2.1 de trempage du matériau tissé dans un bain comprenant une résine dissolue dans un solvant, et
- une étape E4.2.2 de séchage de façon que le solvant s'évapore du matériau tissé pré-imprégné.

Selon un autre mode de réalisation, l'étape E4.2 de pré-imprégnation peut mettre en oeuvre une méthode par thermo-fusion.

Selon cette méthode, l'étape E4.2 de pré-imprégnation comprend :
- une étape E4.2.3 d'application d'une résine sur un substrat par thermo-enduction, et
- une étape E4.2.4 de pressage et de chauffage du substrat avec le matériau tissé de façon que la résine imprègne le matériau tissé.

Le substrat sur lequel de la résine est appliquée peut être du papier.

Cette étape E4.2 de pré-imprégnation permet, en particulier, de maintenir les fils de trame 7 et les fils de chaîne 8 espacés les uns des autres lors de la fabrication du panneau acoustique 3.

Selon une variante de réalisation, l'étape E1 de dépôt de la peau acoustique 4 sur la surface 10.1 d'un moule 10 est suivie d'une étape E5 de polymérisation de la peau acoustique 4.

Selon une variante de réalisation, chaque étape de fixation E2 et E3 comprend une étape E6.1 E6.2 de dépôt d'un adhésif polymérisable.

Préférentiellement, dans cette dernière variante de réalisation, l'étape E3 de fixation d'une peau pleine 6 sur la couche alvéolaire 5 est suivie d'une étape E7 de polymérisation de l'adhésif polymérisable. Si l'étape E5 de polymérisation de la peau acoustique 4 n'a pas été réalisée après l'étape E1 de dépôt de la peau acoustique 4 sur la surface 10.1 d'un moule 10, l'étape E7 de polymérisation de l'adhésif polymérisable comprend également la polymérisation de la peau acoustique. Cela peut donc permettre de rassembler deux étapes de polymérisation (de la peau acoustique puis de l'adhésif) en une étape.

Ce procédé permet de supprimer les étapes suivantes :
- de la fabrication d'une peau acoustique 4 selon des méthodes longues, complexes et onéreuses,
- de l'inspection manuelle qui évalue la qualité de la peau acoustique 4,
- d'une étape intermédiaire de polymérisation de la peau acoustique 4.

Ainsi, ce procédé permet de réduire le temps de fabrication du panneau acoustique 3.

## Revendications

1. Panneau acoustique pour nacelle (2) d'aéronef (1),
comprenant :
- une couche alvéolaire (5), la couche alvéolaire (5) étant délimitée par une première surface (5.1) et une deuxième surface opposée (5.2),
- une peau acoustique (4) fixée sur la première surface (5.1) de la couche alvéolaire (5),
- une peau pleine (6) fixée sur la deuxième surface (5.2) de la couche alvéolaire (5),
le panneau acoustique (3) étant **caractérisé en ce que** la peau acoustique (4) comprend une couche d'un matériau tissé pré-imprégné contenant des fils de trame (7) espacés les uns des autres et des fils de chaîne (8) espacés les uns des autres, de façon que la peau acoustique (4) présente des ouvertures (9) entre les fils (7, 8), les fils de trame (7) présentant un espacement (D1) entre eux compris entre 0,3 mm et 1,5 mm, et les fils de chaîne (8) présentant un espacement (D2) entre eux compris entre 0,3 mm et 1,5 mm.

2. Procédé de fabrication d'un panneau acoustique (3) pour nacelle (2) d'aéronef (1) comprenant,
- une étape (E1) de dépôt, sur la surface (10.1) d'un moule (10), d'une peau acoustique (4),
- une étape (E2) de fixation, sur la peau acoustique (4), d'une première surface (5.1) d'une couche alvéolaire (5) configurée pour piéger du bruit,
- une étape (E3) de fixation, sur une deuxième surface (5.2) de la couche alvéolaire (5) opposée à la première surface (5.1), d'une peau pleine (6),
le procédé étant **caractérisé en ce que** l'étape (E1) de dépôt, sur la surface (10.1) d'un moule (10), d'une peau acoustique (4) consiste à déposer une couche de matériau tissé pré-imprégné contenant des fils de trame (7) espacés les uns des autres et des fils de chaîne (8) espacés les uns des autres, de façon à former des ouvertures (9) entre les fils (7, 8), les fils de trame (7) présentant un espacement (D1) entre eux compris entre 0,3 mm et 1,5 mm, et les fils de chaîne (8) présentant un espacement (D2) entre eux compris entre 0,3 mm et 1,5 mm.

3. Procédé selon la revendication 2, **caractérisé en ce qu'**il comprend en outre une étape (E4) de confection de la peau acoustique (4) incluant :
- une étape (E4.1) de tissage d'une couche, de façon que les fils de trame (7) du tissage soient espacés les uns des autres et que les fils de chaîne (8) du tissage soit espacés les uns des autres, de manière à former une couche de matériau tissé,
- une étape (E4.2) de pré-imprégnation du matériau tissé de façon à former une couche de matériau tissé pré-imprégné.

4. Procédé selon la revendication 3,
**caractérisé en ce que** l'étape (4.2) de pré-imprégnation comprend :
- une étape (E4.2.1) de trempage du matériau tissé dans un bain comprenant une résine dissolue dans un solvant, et
- une étape (E4.2.2) de séchage de façon que le solvant s'évapore du matériau tissé pré-imprégné.

5. Procédé selon la revendication 3,
**caractérisé en ce que** l'étape (E4.2) de pré-imprégnation comprend :
- une étape (E4.2.3) d'application d'une résine sur un substrat par thermo-enduction, et
- une étape (E4.2.4) de pressage et de chauffage du substrat avec le matériau tissé de façon que la résine imprègne le matériau tissé.

6. Procédé selon au moins une des revendications 3 à 5,
**caractérisé en ce que** l'étape (E1) de dépôt de la peau acoustique sur la surface (10.1) d'un moule est suivie d'une étape (E5) de polymérisation de la peau acoustique.

7. Procédé selon au moins une des revendications 3 à 6,
**caractérisé en ce que** chaque étape (E2, E3) de fixation comprend une étape de dépôt (E6) d'un adhésif polymérisable.

8. Procédé selon la revendication 7,
**caractérisé en ce que** l'étape (E2) de fixation d'une peau pleine (6) sur la couche alvéolaire (5) est suivie d'une étape (E7) de polymérisation de la peau acoustique (4) et de l'adhésif polymérisable.

9. Nacelle d'un aéronef,
**caractérisée en ce qu'**elle comprend un panneau acoustique (3) selon la revendication 1.

10. Aéronef,
**caractérisé en ce qu'**il comporte une nacelle (2) selon la revendication 9.
